# EUROPEAN PATENT APPLICATION

(11) **EP 1 617 321 A2**
(43) Date of publication of application: **18.01.2006**
(21) Application number: 05011405.7
(22) Date of filing: 25.05.2005
(51) Int. Cl.: G06F 3/12, G06K 15/00

(54) **Printer with resource correspondance table**

(30) Priority: 28.05.2004 US 857693
(71) Applicant: Ricoh Co., Ltd., Tokyo 143-8555 (JP)
(72) Inventor: Kim, Seong, c/o Ricoh Corporation, Cupertino California 95014-5924 (US)
(74) Representative: Schwabe - Sandmair - Marx

(57) **Abstract**

A method for extending the longevity of a printing device is disclosed. According to one aspect, the printing device receives input data. The input data indicates a first resource. Based on resource information that indicates one or more resources provided by the printing device, it is determined whether the printing device provides the first resource. In response to a determination that the printing device does not provide the first resource, it is determined, based on the resource information, which of the one or more resources is the most similar to the first resource. The input data is modified to indicate, instead of the first resource, a second resource that is the most similar of the one or more resources to the first resource. The modified input data then may be sent to the printing device's printing module.

## Description

### FIELD OF THE INVENTION

The invention relates to printing devices, and more specifically, to a technique for extending the longevity of a printing device.

### BACKGROUND OF THE INVENTION

Printing devices, such as printers, copy machines, and multi-function peripherals (MFPs) such as the Ricoh Aficio Color 6513 system, are often designed to provide a variety of functions. For example, a printing device may be designed to offer collating, punching, and/or stapling functions. By invoking a print feature of an application executing on a computer, a user may instruct his computer to print a document using a selected printing device. The user may configure the print feature to instruct the selected printing device to perform selected actions, such as collating, punching, and/or stapling, relative to the document to be printed.

At least in times past, printing devices typically performed functions in response to receiving specific control codes. Applications that sent data to such printing devices would send control codes to the printing devices in order to cause the printing devices to perform desired actions.

As time passes, the state of the art changes. Newer and faster printing devices become available. Often, new versions of applications are released in order to take advantage of features offered by the newer and faster printing devices. As newer and faster printing devices become available, the techniques used to control printing devices often change as well. Old control techniques used by old "legacy" applications sometimes become obsolete. Backwards compatibility with old control techniques is often overlooked. It is difficult, and even impractical, to design new applications to remain compatible with all printing devices that were used years and even decades earlier. This is especially so when legacy printing devices are no longer used by a significant portion of the market.

This problem is not merely a historical artifact. It is likely that printing devices being used today will be considered outdated some day. Although the printing devices being offered for purchase today are usually compatible with many of the applications being offered for purchase today, the applications of the future might not always be designed to remain compatible with all of the printing devices being offered for purchase today. The printing device control techniques used by contemporary applications might be considered obsolete within just a few years. As a consequence, the printing devices being offered for purchase today, which are compatible with contemporary control techniques but might not be compatible with future control techniques, have a significantly limited lifespan.

Based on the foregoing, there is a need for a printing device that does not suffer from the limitations of the printing devices being offered for purchase today.

### SUMMARY OF THE INVENTION

A method for extending the longevity of a printing device is disclosed. According to one aspect, the printing device receives input data. The input data indicates a first resource. Based on resource information that indicates one or more resources provided by the printing device, it is determined whether the printing device provides the first resource. In response to a determination that the printing device does not provide the first resource, it is determined, based on the resource information, which of the one or more resources is the most similar to the first resource. The input data is modified to indicate, instead of the first resource, a second resource that is the most similar of the one or more resources to the first resource. The modified input data then may be sent to the printing device's printing module.

### BRIEF DESCRIPTION OF THE DRAWINGS

Embodiments are illustrated by way of example, and not by way of limitation, in the figures of the accompanying drawings in which like reference numerals refer to similar elements and in which:
FIG. 1 is a flow diagram that depicts a technique for extending the longevity of a printing device, according to one embodiment of the invention;
FIG. 2 is a block diagram that depicts a printing device that is connected to a mapping module that extends the longevity of the printing device, according to one embodiment of the invention;
FIG. 3 is a flow diagram that depicts a process for mapping resources indicated in input data to resources indicated in a target mapping table, according to one embodiment of the invention; and
FIG. 4 is a block diagram that depicts a printing device upon which an embodiment of the invention may be implemented.

### DETAILED DESCRIPTION OF THE INVENTION

In the following description, for the purposes of explanation, specific details are set forth in order to provide a thorough understanding of the invention. However, it will be apparent that the invention may be practiced without these specific details. In some instances, well-known structures and devices are depicted in block diagram form in order to avoid unnecessarily obscuring the invention.

### OVERVIEW

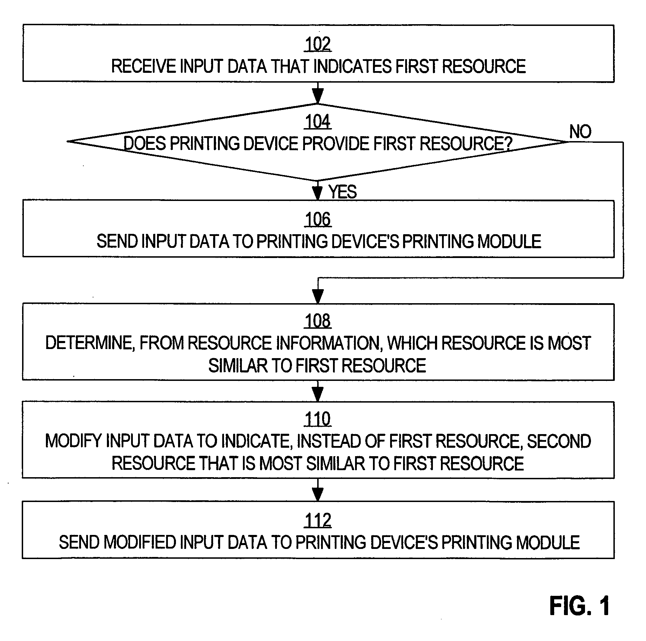

FIG. 1 is a flow diagram that depicts an overview of a technique for extending the longevity of a printing device, according to one embodiment of the invention. For example, a "mapping agent" resident within a flash memory card that is connected to the printing device itself may perform the technique depicted.

In block 102, input data is received. The input data indicates a first resource. In block 104, based on resource information that indicates one or more resources provided by the printing device, it is determined whether the printing device provides the first resource. For example, the resource information may be contained on a flash memory card that is connected to the printing device. If the printing device provides the first resource, then control passes to block 106. Otherwise, control passes to block 108.

In block 106, the input data is sent to the printing device's printing module. Alternatively, in block 108, it is determined, based on the resource information, which of the one or more resources is the most similar to the first resource. In block 110, the input data is modified to indicate, instead of the first resource, a second resource that is the most similar of the one or more resources to the first resource. In block 112, the modified input data is sent to the printing device's printing module.

### EXAMPLE PRINTING DEVICE WITH LONGEVITY-EXTENDING MAPPING MODULE

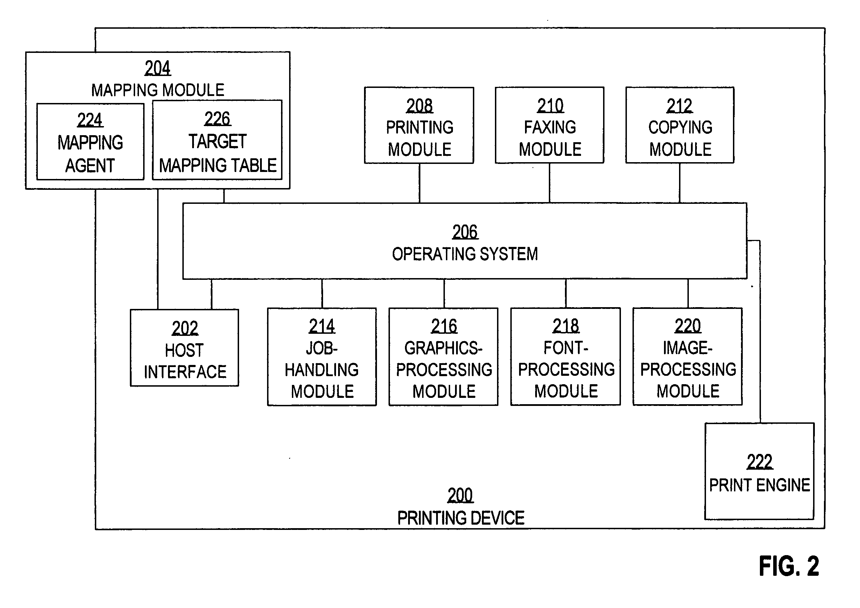

FIG. 2 is a block diagram that depicts a printing device 200 that is connected to a mapping module that extends the longevity of printing device 200, according to one embodiment of the invention. Printing device 200 may be a printer, MFP, copy machine, fax machine, or any other device that can print on sheets of media such as paper or transparencies. Printing device 200 contains or is connected to multiple hardware and software components. For example, printing device 200 comprises a host interface 202, a mapping module 204, an operating system 206, a printing module 208, a faxing module 210, a copying module 212, a job-handling module 214, a graphics-processing module 216, a font-processing module 218, an image-processing module 220, and a print engine 222. While components 202-222 are depicted within printing device 200, one or more of the components may be positioned externally to the printing device.

Printing device 200 receives input data through host interface 202. Such input data may describe, for example, documents to be printed by printing device 200, control signals to cause the printing device to perform specified actions, or other kinds of data.

Host interface 202 is coupled communicatively with operating system 206. If mapping module 204 is installed in printing device 200 as depicted, then host interface 202 is also coupled communicatively to mapping module 204. Host interface 202 sends input data to mapping module 204 if the mapping module is installed. If mapping module 204 is not installed, then host interface 202 sends incoming data to printing module 208 via operating system 206. In one embodiment, mapping module 204 is installed by connecting, to an external port of printing device 200, a flash memory card that contains mapping module 204. In one embodiment, mapping module 204 can be enabled and disabled by sending enable and disable control commands, respectively, to mapping module 204 through host interface 202. In one embodiment, host interface 202 sends, to mapping module 204, only data that was sent to a designated port number that is associated with the mapping module. For example, if the mapping module is associated with port number "5200" and data is sent to port number "5200," then host interface 202 sends the data to mapping module 204. For another example, if the mapping module is associated with port number "5200" and data is sent to port number "5000," then host interface 202 sends the data to printing module 208 via operating system 206 without sending the data to mapping module 204.

When installed, mapping module 204 is coupled communicatively to host interface 202 and operating system 206. Mapping module 204 receives input data from host interface 202. The input data, as received by host interface 202, may indicate a resource that is to be used to perform an action. For example, the input data may indicate that a print job should be printed using paper from a specified input tray and/or that the print job should be output to a specified output tray.

According to one embodiment of the invention, mapping module 204 comprises a mapping agent 224 and a target mapping table 226. Mapping agent 224 is a program that is executable by operating system 206. Mapping agent receives the input data from host interface 202 and determines, based on information contained in target mapping table 226, whether printing device 200 provides the resources indicated in the input data. If printing device 200 does provide the resources indicated in the input data, then printing device sends the input data to printing module 208. Once printing module 208 receives the input data, the printing module processes the input data in the same manner as any ordinary printing device.

Alternatively, if printing device 200 does not provide one or more of the resources indicated in the input data, then, for each resource not so provided, mapping agent 224 determines, based on information contained in target mapping table 226, which one or more of the resources provided by the printing device most closely matches the resource that is indicated in the input data but not provided by printing device 200. For each resource indicated in the input data but not provided by printing device 200, mapping agent 224 makes a replacement in the input data. Mapping agent replaces the indicated but unprovided resources with the provided resources that most closely match the indicated but unprovided resources according to target mapping table 226, thus "mapping" the indicated resource to the provided resource. Mapping agent may also convert the input data according to the techniques described in co-pending U.S. Patent Application No. 10/616,632, "PRINTING DEVICE WITH INSTALLABLE DATA CONVERSION FUNCTION." Once the replacements and/or conversions have been performed, mapping agent sends the modified input data to printing module 208.

In one sense, target mapping table 226 is a "reflection" of printing device 200. Target mapping table 226 indicates one or more resources provided by printing device 200. In target mapping table 226, the resources may be grouped and subgrouped by resource category. For example, software resources may be grouped together in a software group, and hardware resources may be grouped together in a hardware group. In the software resource group, resources may be subgrouped into language, font, function, color, and service subgroups, to name a few examples. In the hardware resource group, resources may be subgrouped into memory, hard disk, input tray, output tray, staple, punch, and duplex subgroups, to name a few examples. An example of target mapping table 226 is depicted in Table 1 below.

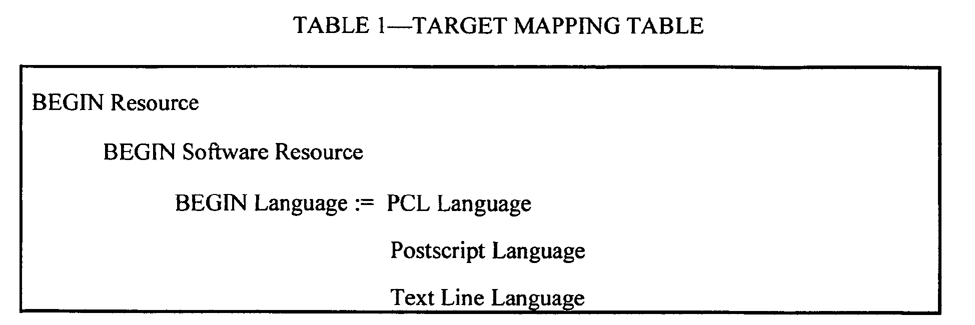

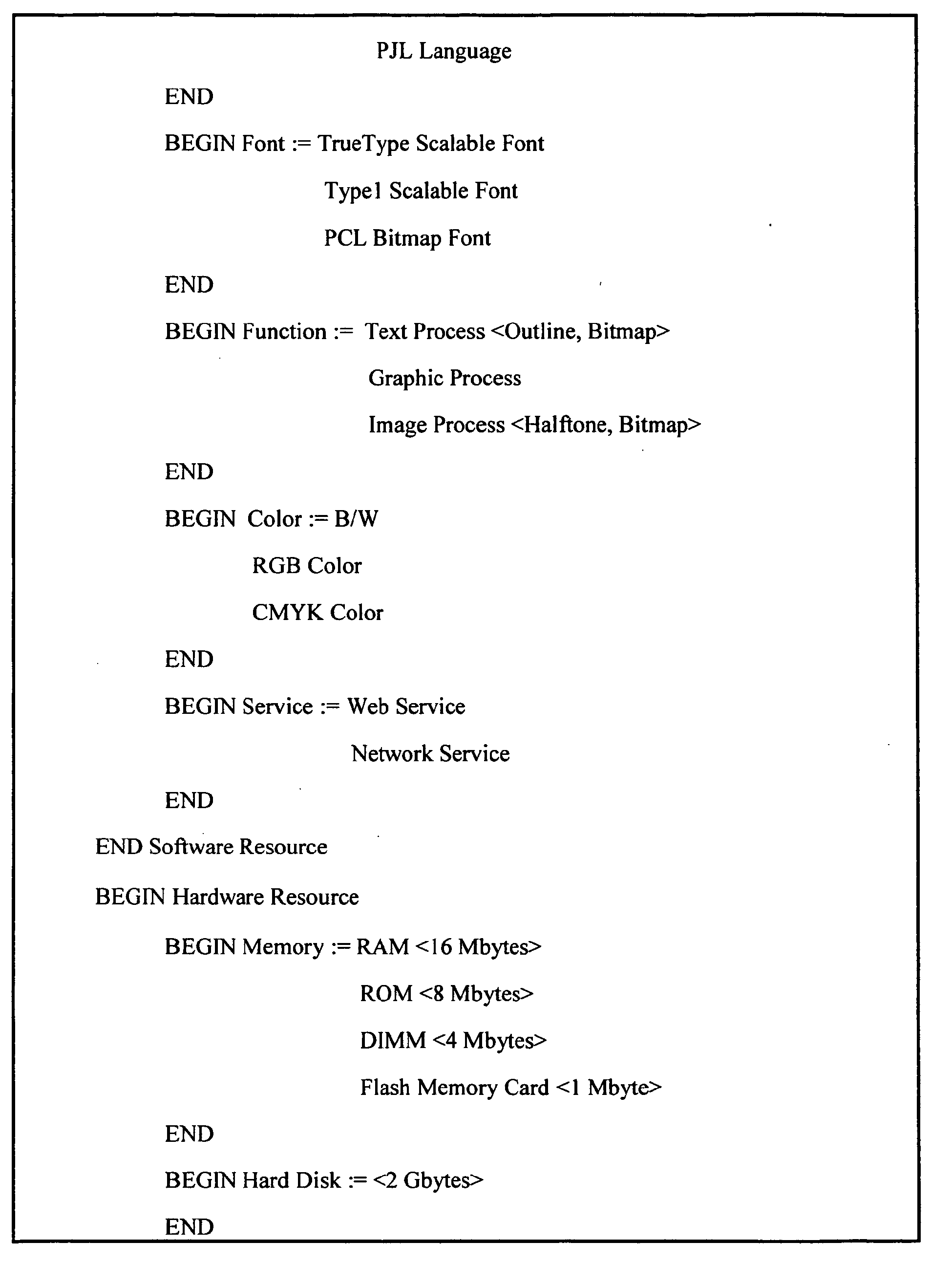

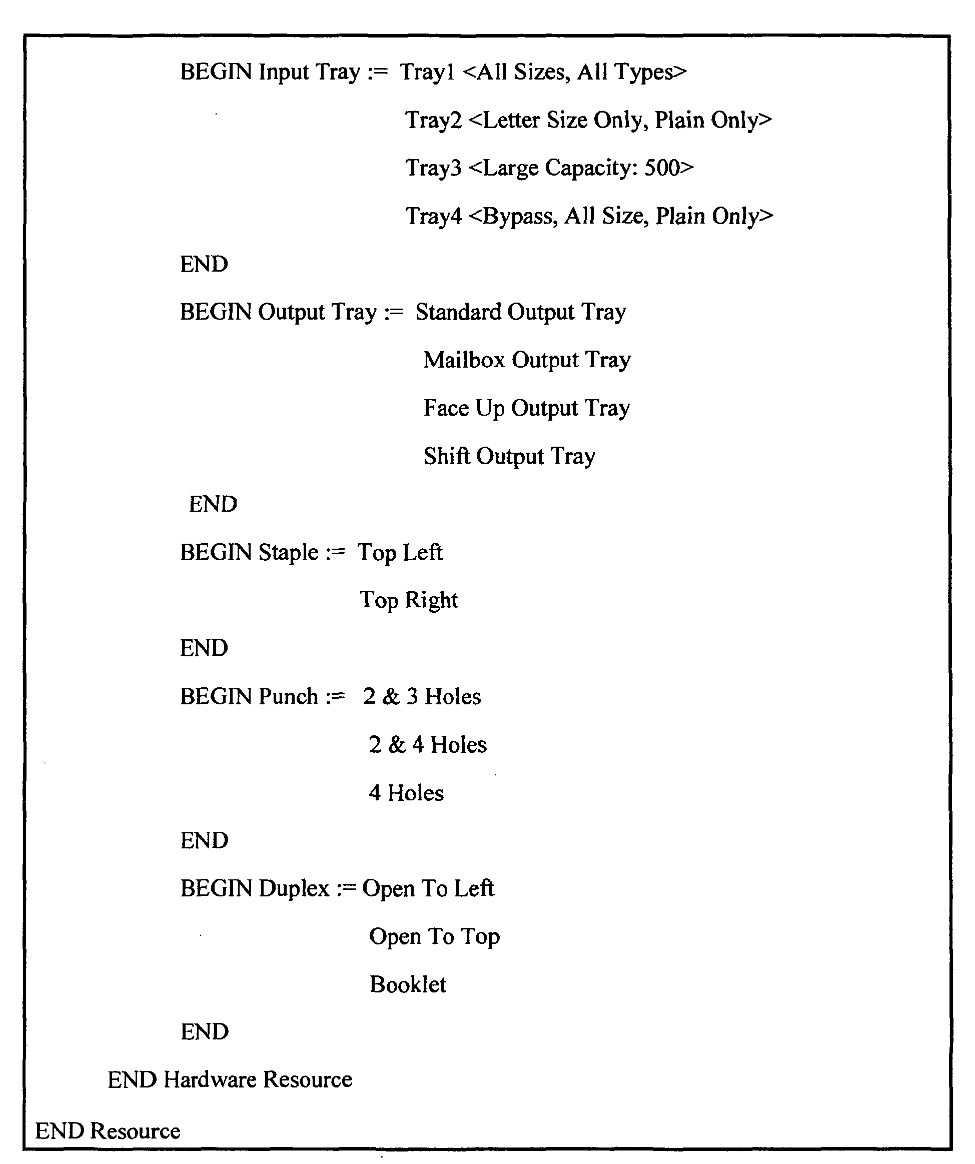

For each particular resource described in target mapping table 226, the target mapping table may indicate one or more attributes of the particular resource. For example, in Table 1 above, the attributes associated with resource "Tray1" indicate that resource "Tray1" is capable of accepting all sizes and all types of paper. For another example, the attributes associated with resource "Tray3" indicate that resource "Tray3" is capable of holding up to 500 sheets of paper.

In order to match resources in target mapping table 226 with resources indicated in input data, mapping agent 224 may be designed to recognize attributes of resources indicated in input data. For example, a customer may contact the manufacturer of printing device 200 and tell the manufacturer about the resources that are indicated in input data that the customer's applications send to the printing device. The customer may tell the manufacturer about the attributes of each such resource. With this information, the manufacturer can design mapping agent 224 to recognize the attributes of the resources indicated in the input data, so that by comparing the attributes of the resources indicated in the input data with the attributes of the resources indicated in mapping table 226, the mapping agent can intelligently map the indicated resources to the provided resources and modify the input data as described above. Once the manufacturer has designed mapping agent 224 according to the customer's specifications, the manufacturer can ship, to the customer, a flash memory card that contains the mapping agent. The manufacturer can ship the flash memory card to the customer along with printing device 200.

### INSTALLABLE MAPPING MODULE

Mapping module 204 can be installed in printing device 200 without altering any significant element of printing device 200. Printing device 200 functions even without mapping module 204, though without the mapping module, printing device 200 does not offer the longevity-extending functionality provided by the mapping module. Mapping module 204 can be installed and uninstalled from printing device 200 with minimal effort.

For example, mapping module 204 may be implemented in a hardware module that can be plugged into an interface exposed by printing device 200. More specifically, mapping module 204 may be implemented on a flash memory card or in an integrated circuit (IC) card such as a smart card. By inserting the card into a card slot of printing device 200, mapping module 204 is installed in the printing device. Similarly, by removing the card from the card slot, mapping module 204 is uninstalled. Thus, in certain implementations, mapping module 204 is physically installable in printing device 200 without the use of screws or solder, and without opening the chassis of the printing device. Mapping module 204 also may be implemented, for example, in an in-line memory module such as a single in-line memory module (SIMM) or a dual in-line memory module (DIMM).

Alternatively, mapping module 204 may be implemented in software. For example, executable code that implements mapping module 204 may be sent through host interface 202 and stored on a rewritable storage device of printing device 200. The rewritable storage device may be, for example, a hard disk drive, random access memory (RAM), an electrically erasable programmable read-only memory (EEPROM), or other forms of rewritable magnetic, optical, or electronic storage media.

Because mapping module 204 can be installed and removed from printing device 200, the printing device can be supplied, potentially at a lower cost, without the mapping module. Users who will not need mapping module 204 may use printing device 200 without the mapping module. If, at a later time, such users desire to use mapping module 204, the users can install mapping module 204 in printing device 200 without significantly altering existing components of printing device 200. Mapping module 204 can be upgraded or replaced without upgrading or replacing other components of printing device 200.

Furthermore, through mapping module 204, mapping functionality can be installed in printing device 200 without altering the configurations of devices other than printing device 200. No new print driver needs to be installed in order for mapping module 204 to map indicated resources to provided resources. This avoids problems, such as software conflicts, that often attend the installation of new print drivers in connection with an existing operating system.

### EXAMPLE PROCESS FOR MAPPING RESOURCES

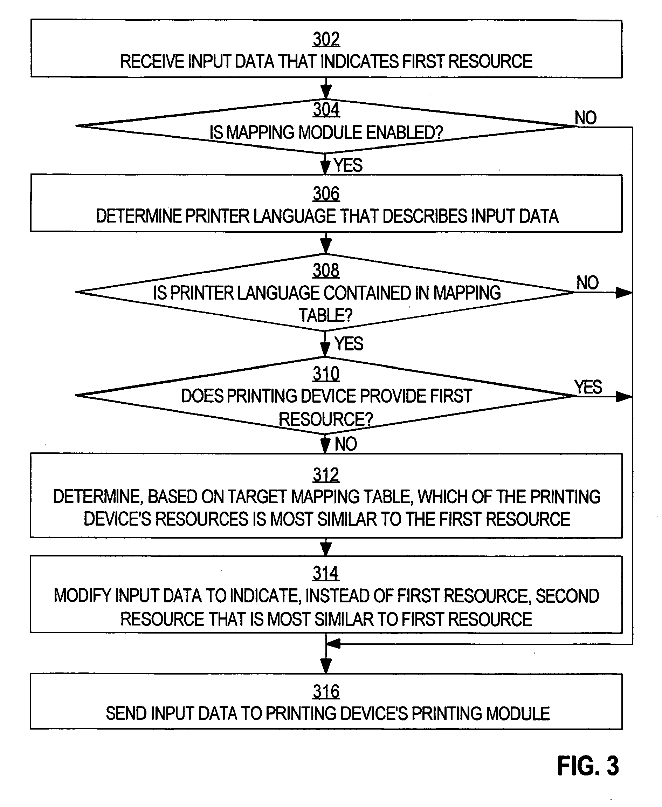

FIG. 3 is a flow diagram that depicts a process for mapping resources indicated in input data to resources indicated in a target mapping table, according to one embodiment of the invention. For example, mapping agent 224 may perform the process depicted.

In block 302, a printing device receives input data. The input data indicates a first resource. For example, the input data might indicate that paper "Tray A" is to be used to print a particular print job. In block 304, it is determined whether the mapping module is enabled. As discussed above, in one embodiment, the mapping module may be enabled or disabled by sending commands to the mapping module. If the mapping module is enabled, then control passes to block 306. Otherwise, control passes to block 316.

In block 306, it is determined, based on the input data, in which printer language the input data is described. For example, by examining the first few bytes of the input data, it can be determined whether the printer language that describes the input data is Printer Control Language (PCL), Postscript, Line Text, PJL, or some other printer language. In block 308, it is determined whether the printer language in which the input data is described is contained in the target mapping table. As shown above in Table 1, the target mapping table may indicate, under the "Language" subgroup, the language resources provided by a target printing device. If the printer language is contained in the target mapping table, then control passes to block 310. Otherwise, control passes to block 316.

In block 310, it is determined, based on the information in the target mapping table, whether the printing device provides the first resource. For example, mapping agent 224 may determine whether "Tray A" indicated in the input data is contained in target mapping table 226. If the printing device provides the first resource, then control passes to block 316. Otherwise, control passes to block 312.

In block 312, it is determined, based on the information in the target mapping table, which of the resources provided by the printing device is most similar to the first resource. For example, mapping agent 224 may compare the attributes of the first resource with the attributes of the resources contained in target mapping table 226 to determine which of the resources contained in the target mapping table is the closest match to the first resource.

In block 314, the input data is modified to indicate, instead of the first resource, a second resource that is the most similar, of the resources in the target mapping table, to the first resource. For example, if mapping agent 224 determines that "Tray1" in target mapping table 226 is the most similar to "Tray A" indicated in the input data, then mapping agent 224 may modify the input data to indicate "Tray1" instead of "Tray A."

In block 316, the input data is sent to the printing device's printing module. Once the printing module receives the input data, the printing module processes the input data in the same manner as any ordinary printing device.

### IMPLEMENTATION MECHANISMS

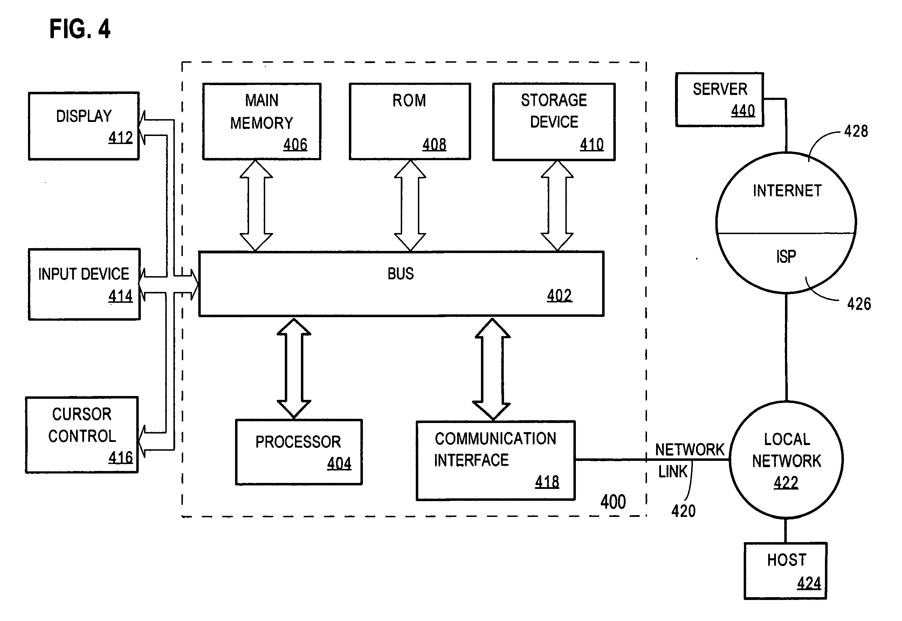

FIG. 4 is a block diagram that depicts a printing device 400 upon which an embodiment of the invention may be implemented. Printing device 400 includes a bus 402 or other communication mechanism for communicating information, and a processor 404 coupled with bus 402 for processing information. Printing device 400 also includes a main memory 406, such as a random access memory (RAM) or other dynamic storage device, coupled to bus 402 for storing information and instructions to be executed by processor 404. Main memory 406 also may be used for storing temporary variables or other intermediate information during execution of instructions to be executed by processor 404. Printing device 400 further includes a read only memory (ROM) 408 or other static storage device coupled to bus 402 for storing static information and instructions for processor 404. A storage device 410, such as a magnetic disk or optical disk, is provided and coupled to bus 402 for storing information and instructions.

Printing device 400 may be coupled via bus 402 to a display 412, such as a liquid crystal display (LCD), for displaying information to a user. An input device 414, including alphanumeric and other keys, is coupled to bus 402 for communicating information and command selections to processor 404. Another type of user input device is cursor control 416, such as a mouse, trackball, stylus, or cursor direction keys for communicating direction information and command selections to processor 404 and for controlling cursor movement on display 412. This input device typically has two degrees of freedom in two axes, a first axis (e.g., x) and a second axis (e.g., y), that allows the device to specify positions in a plane.

The invention is related to the use of printing device 400 in a wireless communications architecture. According to one embodiment of the invention, wireless communications are provided by printing device 400 in response to processor 404 executing one or more sequences of one or more instructions contained in main memory 406. Such instructions may be read into main memory 406 from another computer-readable medium, such as storage device 410. Execution of the sequences of instructions contained in main memory 406 causes processor 404 to perform the process steps described herein. One or more processors in a multi-processing arrangement may also be employed to execute the sequences of instructions contained in main memory 406. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 404 for execution. Such a medium may take many forms, including but not limited to, non-volatile media, volatile media, and transmission media. Non-volatile media includes, for example, optical or magnetic disks, such as storage device 410. Volatile media includes dynamic memory, such as main memory 406. Transmission media includes coaxial cables, copper wire and fiber optics, including the wires that comprise bus 402. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 404 for execution. For example, the instructions may initially be carried on a magnetic disk of a remote computer. The remote computer can load the instructions into its dynamic memory and send the instructions over a telephone line using a modem. A modem local to computer system 400 can receive the data on the telephone line and use an infrared transmitter to convert the data to an infrared signal. An infrared detector coupled to bus 402 can receive the data carried in the infrared signal and place the data on bus 402. Bus 402 carries the data to main memory 406, from which processor 404 retrieves and executes the instructions. The instructions received by main memory 406 may optionally be stored on storage device 410 either before or after execution by processor 404.

Printing device 400 also includes a communication interface 418 coupled to bus 402. Communication interface 418 provides a two-way data communication coupling to a network link 420 that is connected to a local network 422. For example, communication interface 418 may be an integrated services digital network (ISDN) card or a modem to provide a data communication connection to a corresponding type of telephone line. As another example, communication interface 418 may be a LAN card to provide a data communication connection to a compatible LAN. Wireless links may also be implemented. In any such implementation, communication interface 418 sends and receives electrical, electromagnetic or optical signals that carry digital data streams representing various types of information.

Network link 420 typically provides data communication through one or more networks to other data devices. For example, network link 420 may provide a connection through local network 422 to a host computer 424 or to data equipment operated by an Internet Service Provider (ISP) 426. ISP 426 in turn provides data communication services through the worldwide packet data communication network now commonly referred to as the Internet 428. Local network 422 and Internet 428 both use electrical, electromagnetic or optical signals that carry digital data streams. The signals through the various networks and the signals on network link 420 and through communication interface 418, which carry the digital data to and from printing device 400, are example forms of carrier waves transporting the information.

Printing device 400 can send messages and receive data, including program code, through the network(s), network link 420 and communication interface 418. In the Internet example, a server 430 might transmit a requested code for an application program through Internet 428, ISP 426, local network 422 and communication interface 418. In accordance with the invention, one such downloaded application provides for configuring a monitoring system to monitor selected network elements as described herein. Processor 404 may execute the received code as it is received and/or stored in storage device 410 or other non-volatile storage for later execution. In this manner, printing device 400 may obtain application code in the form of a carrier wave.

In the foregoing specification, specific embodiments of the invention have been described. However, various modifications and changes may be made to such embodiments of the invention without departing from the broader spirit and scope of the invention. The specification and drawings are, accordingly, to be regarded in an illustrative rather than a restrictive sense.

## Claims

1. A printing device configured to perform steps comprising:
receiving input data that indicates a first resource;
determining, based on resource information that indicates one or more resources provided by said printing device, whether said first resource is provided by said printing device; and
in response to a determination that said first resource is not provided by said printing device:
determining, based on said resource information, which of said one or more resources is most similar to said first resource; and
modifying said input data to indicate, instead of said first resource, a second resource, wherein said second resource is the most similar of said one or more resources to said first resource.

2. The printing device of Claim 1, wherein said resource information indicates one or more attributes of said one or more resources, and wherein determining which of said one or more resources is most similar to said first resource comprises:
determining which of said one or more resources shares the most attributes with said first resource.

3. The printing device of Claim 1, wherein said resource information indicates one or more fonts in which said printing device can print.

4. The printing device of Claim 1, wherein said resource information indicates one or more input trays that are provided by said printing device.

5. The printing device of Claim 4, wherein said resource information indicates one or more attributes of media that can be accepted by at least one of the one or more input trays.

6. The printing device of Claim 1, wherein said resource information is stored on a flash memory card that is connectable to said printing device.

7. A method comprising:
receiving input data that indicates a first resource;
determining, based on resource information that indicates one or more resources provided by a printing device, whether said first resource is provided by said printing device; and
in response to a determination that said first resource is not provided by said printing device:
determining, based on said resource information, which of said one or more resources is most similar to said first resource; and
modifying said input data to indicate, instead of said first resource, a second resource, wherein said second resource is the most similar of said one or more resources to said first resource.

8. The method of Claim 7, wherein said resource information indicates one or more attributes of said one or more resources, and wherein determining which of said one or more resources is most similar to said first resource comprises:
determining which of said one or more resources shares the most attributes with said first resource.

9. The method of Claim 7, wherein said resource information indicates one or more fonts in which said printing device can print.

10. The method of Claim 7, wherein said resource information indicates one or more input trays that are provided by said printing device.

11. The method of Claim 10, wherein said resource information indicates one or more attributes of media that can be accepted by at least one of the one or more input trays.

12. The method of Claim 7, wherein said resource information is stored on a flash memory card that is connectable to said printing device.

13. A computer-readable medium carrying one or more sequences of instructions for managing a network of two or more printers, wherein execution of the one or more sequences of instructions by one or more processors causes the one or more processors to perform the steps of:
receiving input data that indicates a first resource;
determining, based on resource information that indicates one or more resources provided by a printing device, whether said first resource is provided by said printing device; and
in response to a determination that said first resource is not provided by said printing device:
determining, based on said resource information, which of said one or more resources is most similar to said first resource; and
modifying said input data to indicate, instead of said first resource, a second resource, wherein said second resource is the most similar of said one or more resources to said first resource.

14. The computer-readable medium of Claim 13, wherein said resource information indicates one or more attributes of said one or more resources, and wherein determining which of said one or more resources is most similar to said first resource comprises:
determining which of said one or more resources shares the most attributes with said first resource.

15. The computer-readable medium of Claim 13, wherein said resource information indicates one or more fonts in which said printing device can print.

16. The computer-readable medium of Claim 13, wherein said resource information indicates one or more input trays that are provided by said printing device.

17. The computer-readable medium of Claim 16, wherein said resource information indicates one or more attributes of media that can be accepted by at least one of the one or more input trays.

18. The computer-readable medium of Claim 13, wherein said resource information is stored on a flash memory card that is connectable to said printing device.

19. A printing device comprising:
means for receiving input data that indicates a first resource;
means for determining, based on resource information that indicates one or more resources provided by a printing device, whether said first resource is provided by said printing device;
means for determining, in response to a determination that said first resource is not provided by said printing device, and based on said resource information, which of said one or more resources is most similar to said first resource; and
means for modifying, in response to a determination that said first resource is not provided by said printing device, said input data to indicate, instead of said first resource, a second resource, wherein said second resource is the most similar of said one or more resources to said first resource.

20. A printing device configured to perform steps comprising:
receiving input data that indicates a first resource;
in response to receiving said input data, determining whether a particular functionality of said printing device is enabled;
in response to a determination that said particular functionality is not enabled, sending said input data to a printing module of said printing device; and
in response to a determination that said particular functionality is enabled:
determining, based on said input data, a printer language in which said input data is described;
determining whether said printer language is contained in resource information that indicates one or more resources provided by said printing device;
in response to a determination that said printer language is not contained in said resource information, sending said input data to said printing module of said printing device; and
in response to a determination that said printer language is contained in said resource information:
determining, based on resource information that indicates one or more resources provided by said printing device, whether said first resource is provided by said printing device;
in response to a determination that said first resource is provided by said printing device, sending said input data to said printing module of said printing device; and
in response to a determination that said first resource is not provided by said printing device:
determining, based on said resource information, which of said one or more resources is most similar to said first resource;
modifying said input data to indicate, instead of said first resource, a second resource, wherein said second resource is the most similar of said one or more resources to said first resource; and
sending the modified input data to said printing module of said printing device.
